(19) Europäisches Patentamt
European Patent Office
Office européen des brevets

(11)  **EP 4 254 268 A1**

(12)  **EUROPEAN PATENT APPLICATION**

(43) Date of publication:
**04.10.2023   Bulletin 2023/40**

(51) International Patent Classification (IPC):
**G06N 3/04** *(2023.01)*   **G06N 5/02** *(2023.01)*
**G06N 5/04** *(2023.01)*   **G06N 7/00** *(2023.01)*

(21) Application number: **22165798.4**

(22) Date of filing: **31.03.2022**

(52) Cooperative Patent Classification (CPC):
**G06N 5/022; G06N 3/045;** G06N 5/045; G06N 7/01

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Siemens Aktiengesellschaft
80333 München (DE)**

(72) Inventors:
• **Hildebrandt, Marcel
  80634 München (DE)**
• **Joblin, Mitchell
  81825 München (DE)**
• **Liu, Tong
  80805 München (DE)**
• **Liu, Yushan
  81737 München (DE)**

(74) Representative: **Siemens Patent Attorneys
Postfach 22 16 34
80506 München (DE)**

(54)    **METHOD AND SYSTEM FOR RECOMMENDING MODULES FOR AN ENGINEERING PROJECT**

(57)    Based on a graph storing (1) a current state of an engineering project consisting of modules, a graph neural network computes (2) an embedding for each node. For each node embedding, a classifier determines (3) a preliminary confidence score for each class, which represents a type of module that could be added to the engineering project. A topology-based measure is calculated (4) at least for a current center node. A blank node is assigned (5) to a bin depending on the topology-based measure that has been computed for the current center node. A post-processor calibrates (6) all preliminary confidence scores for the blank node by applying a scaling factor depending on the assigned bin. Finally, a user interface outputs (7) at least the class with the highest calibrated confidence score for the blank node as well as the respective calibrated confidence score. Based on the topology-based measure, the binning scheme of the method takes the graph structure into account and allows for an adaptive calibration, for example depending on node properties in each bin that have been observed during a previous training phase using a set of completed engineering projects as training data. The calibrated scores increase the interpretability of the model and thus lead to more trustworthiness of the recommender system. Modules that are not compatible to the current engineering project will be apparent by their corresponding low confidence scores. Further, if correct modules only have a low certainty, it indicates that only insufficient information is available so that further data should be collected regarding this module or domain to improve the recommender system.

FIG 4

EP 4 254 268 A1

## Description

The invention relates to a method and system for recommending modules for an engineering project, for example to a user who is working on a complex engineering project such as an industrial automation system.

Over the past two decades, advancements in industrial automation have transformed the factory floors and processes in several industries, ranging from process industries (e.g., Oil and Gas, Power and Utilities, Water and Wastewater) to hybrid industries (e.g., Food and Beverage, Wind) to discrete industries (e.g., Automotive Manufacturing, Aerospace, Robotics).

Automating processes in any of these industries requires engineers to design and configure an industrial automation solution - in other words to complete an engineering project for a complex system, consisting of a multitude of individual modules, the interplay of which fulfills the functional requirements arising from the intended application. Selection of necessary modules is typically done using configuration software offered by their manufacturer. Working on these engineering projects also requires specifying connections between selected modules by the user.

Other examples of engineering projects include printed circuit boards and autonomous vehicles. Among those use cases is module recommendation in an electronic system design context, which includes the selection of compatible modules, the specification of the correct placement of the modules on the circuit board, and the identification of the optimal connection of the routing scheme. Another application is Simcenter Amesim, which allows the creation of complex mechatronic systems that can be simulated once a design is made complete by connecting modules to each other. Information about port compatibilities of the modules is available and integrated in the recommendation process.

These systems, like the industrial automation solutions described above, can be complex and comprise a multitude of different modules. The configuration of the complex engineering projects may comprise an iterative process, in which a user incrementally selects modules (hardware and/or software components for building the engineering project). The combination of these selected modules can fulfill functional requirements of the engineering projects while being also compatible with one another. The configuration of a complex engineering project is not an easy task and requires time, effort, experience, and a certain amount of domain-specific knowledge to be completed correctly by a user.

To speed up the design process and alleviate information overload of a user performing such a complex engineering process, recommender systems are widely deployed to perform personalized information filtering in a variety of applications, including industrial ones, such as product configurators for engineering systems, simulation software for modeling and analysis of multi-domain systems, schematic drawing software, or clinical recommender systems in the health care domain. These recommender systems propose appropriate modules based on information about existing designs and background knowledge to support the user.

All the above-described complex systems can be modeled as graphs, where modules are represented as nodes and the interactions or connections between them as edges. Graphs are an appropriate choice of representation because the link structure between modules plays an important role in recognizing the functional properties of the system.

WO 2021037603 A1 discloses a recommendation engine for automatically providing recommendations to support a user in the completion of an engineering project. The entire contents of that document are incorporated herein by reference.

WO 2020120123 A1 also discloses a recommendation engine for automatically providing recommendations to support a user in the completion of an engineering project. The entire contents of that document are incorporated herein by reference.

It is an object of the present invention to provide a method and system that provide an alternative to the state of the art.

The objectives of the invention are solved by the independent claims. Further advantageous arrangements and embodiments of the invention are set forth in the respective dependent claims.

According to the computer implemented method for recommending modules for an engineering project, the following operations are performed by components, wherein the components are software components executed by one or more processors and/or hardware components:

- storing, in a database,

  - a set of classes, with each class representing a type of module, and with each module consisting of a hardware module and/or software module that can be used in an engineering project, and
  - a graph representing a current state of the engineering project with nodes and edges,

    - with each node representing a module and its technical attributes that has been previously selected for the engineering project,
    - with each edge representing a connection between the previously selected modules in the engineering project,
    - with a current center node representing one of the previously selected modules to which a new module should be connected, wherein nodes connected to the current center node are neighbors of the current center node,

- with a blank node representing the new module, wherein the blank node has no technical attributes, and
- with an edge connecting the current center node to the blank node,

- computing, by a graph neural network, an embedding in latent space for each node or at least for the current center node and its neighbors,
- determining, by a classifier, for each node embedding a preliminary confidence score for each class,
- calculating a topology-based measure at least for the current center node,
- assigning the blank node to a bin from a set of bins depending on the topology-based measure that has been computed for the current center node,
- calibrating, by a post-processor, all preliminary confidence scores for the blank node by applying a scaling factor depending on the assigned bin, and
- outputting, by a user interface, at least the class with the highest calibrated confidence score for the blank node as well as the respective calibrated confidence score.

The system for recommending modules for an engineering project comprises the one or more processors, the database, the graph neural network (GNN), the classifier (f), the post-processor, and the user interface according to the method, wherein at least some of these components are hardware components, and wherein all of these components are configured for the execution of the respective operations according to the method.

The following advantages and explanations are not necessarily the result of the object of the independent claims. Rather, they may be advantages and explanations that only apply to certain embodiments or variants.

In connection with the invention, unless otherwise stated in the description, the terms "training", "generating", "computer-aided", "calculating", "determining", "reasoning", "retraining" and the like relate preferably to actions and/or processes and/or processing steps that change and/or generate data and/or convert the data into other data, the data in particular being or being able to be represented as physical quantities, for example as electrical impulses.

The term "computer" should be interpreted as broadly as possible, in particular to cover all electronic devices with data processing properties. Computers can thus, for example, be personal computers, servers, clients, programmable logic controllers (PLCs), handheld computer systems, pocket PC devices, mobile radio devices, smartphones, devices or any other communication devices that can process data with computer support, processors and other electronic devices for data processing. Computers can in particular comprise one or more processors and memory units.

In connection with the invention, a "memory", "memory unit" or "memory module" and the like can mean, for example, a volatile memory in the form of random-access memory (RAM) or a permanent memory such as a hard disk or a Disk.

Latent space is a low-dimensional vector space. The database can be stored in RAM, on a hard disk or on a solid-state drive, for example. The database can be implemented by simply storing a set of datasets, or by any other kind of database, for example a relational database or a graph database. Furthermore, the database can contain several databases, for example a graph database for the graph and a set of datasets for the other information.

Based on the topology-based measure, the binning scheme of the method takes the graph structure into account and allows for an adaptive calibration, for example depending on node properties in each bin that have been observed during a previous training phase using a set of completed engineering projects as training data.

Each calibrated confidence score indicates a likelihood that a module of the respective class is needed for completing the engineering project. For example, a calibrated confidence score of 0.8 allows the user to interpret that the respective class has an estimated likelihood of at least 80% of being necessary for completing the engineering project, in the sense that based on previous engineering projects, a probability of 80% has been computed that the user is going to select a module of this class for the current project.

The method and system, or at least some of their embodiments, provide a topology-aware calibration method that scales the confidence scores depending on the output of neighboring nodes. Calibrated scores increase the interpretability of the model and thus lead to more trustworthiness of the recommender system. Modules that are not compatible to the current engineering project should be apparent by their corresponding low confidence scores. Further, if correct modules only have a low certainty, it indicates that only insufficient information is available so that further data should be collected regarding this module or domain to improve the recommender system. Without calibration, a user could mistakenly accept a recommendation even though the recommender system has insufficient evidence to make a confident decision. This could lead to engineered systems with poor functional properties or even engineered systems that are potentially harmful to their users.

Compared to existing recommender systems that directly output the predictions and confidence scores, the method and system, or at least some of their embodiments, add a calibration step to make the confidence scores more interpretable. The calibration step is based on a multi-class approach that calibrates all confidence scores and not only the top prediction with the highest score, which is done by most existing calibration approaches. Further, the calibration step takes topological information into account and calibrates the confidence scores depending on the node properties.

The method and system, or at least some of their embodiments, formulate the recommendation of suitable modules as a (multi-label) node classification task, where the objective is to predict module types that should be connected to an existing module in the current state of the engineering project, which is represented by the current center node. To better exploit the graph structure, a graph neural network (GNN) is employed, which learns entity embeddings for node classification.

GNNs achieve good performance with respect to accuracy, but the confidence scores associated with the predictions are usually not calibrated. The calibration step allows the confidence scores to reflect the ground-truth probabilities of the predicted classes, which makes it easier for a user to interpret the confidence scores. While the preliminary confidence scores already induce an order which can be used to rank the recommended module types by relevance, the calibration step also corrects the actual magnitude of the confidence scores and makes them more meaningful, making it possible to determine a specific threshold that allows to discriminate relevant from non-relevant modules across different center nodes. In contrast to existing calibration methods for machine learning algorithms, the calibration step takes the structure of the graph into account, which is useful for calibration.

In an embodiment of the method, the outputting operation includes outputting a ranked list of the calibrated confidence scores as well as the respective classes for the blank node.

In an embodiment of the method, only calibrated confidence scores above a given threshold are included in the ranked list.

For example, for a threshold $t = 0.1,$ one would only display classes that have an estimated chance of at least 10% of being selected by the user.

An embodiment of the method comprises the additional operations of recognizing, by the user interface, a user interaction selecting the recommended class or one of the recommended classes, and automatically completing the engineering project by replacing the blank node with a module of the selected class in the database.

An embodiment of the method comprises the additional step of automatically producing the engineering project, in particular by printing the engineering project with a 3D printer, or by automatically configuring autonomous machines, in particular by configuring software modules of the autonomous machines, in order to produce the engineering project, or by automatically assigning autonomous machines to perform as the modules of the engineering project, in particular by installing and/or activating and/or configuring software modules of the autonomous machines.

For example, if the engineering project is printable by a 3D printer, this step consists of automatically printing the engineering project with the 3D printer. If the engineering project is an industrial automation solution, this step consists of automatically assigning and configuring, by a suitable automation system, autonomous machines in order to implement the industrial automation solution.

In another embodiment of the method, the topology-based measure is a same-class-neighbor ratio, which is computed as a proportion of the neighbors of the current center node for which the class with the highest determined preliminary confidence score is identical to the class with the highest determined preliminary confidence score for the current center node.

This embodiment allows for calibrating nodes with similar neighborhood structures and corresponding confidence scores in a similar way.

An embodiment of the method comprises the initial steps of using several graphs of completed engineering projects as training data, randomly deleting nodes in the training data, and adjusting trainable parameters of the graph neural network and classifier according to a training objective that maximizes, for blank nodes replacing the deleted nodes, the calibrated confidence scores for the classes of the deleted nodes.

An embodiment of the method comprises the initial step of training the post-processor for temperature scaling for each bin, by determining an individual temperature as the scaling factor for each bin.

This embodiment learns a temperature for each bin in order to rescale and calibrate the confidence scores of the nodes in that bin.

In another embodiment of the method, the engineering project is an industrial engineering project, in particular an industrial automation system.

The computer program product with program instructions for carrying out a method according to one of the method claims.

The provision device for the computer program product according to the preceding claim, wherein the provision device stores and/or provides the computer program product.

The foregoing and other aspects of the present invention are best understood from the following detailed description when read in connection with the accompanying drawings. For the purpose of illustrating the invention, there are shown in the drawings embodiments that are presently preferred, it being understood, however, that the invention is not limited to the specific instrumentalities disclosed. The embodiments may be combined with each other. Furthermore, the embodiments may be combined with any of the features described above. Unless stated otherwise, identical reference signs denote the same features or functionally identical elements between drawings. Included in the drawings are the following Figures:

Fig. 1   shows a first embodiment,

Fig. 2   shows another embodiment,

Fig. 3   shows a computation of a topology-based measure, and

Fig. 4     shows an embodiment for recommending modules for an engineering project.

In the following description, various aspects of the present invention and embodiments thereof will be described. However, it will be understood by those skilled in the art that embodiments may be practiced with only some or all aspects thereof. For purposes of explanation, specific numbers and configurations are set forth in order to provide a thorough understanding. However, it will also be apparent to those skilled in the art that the embodiments may be practiced without these specific details.

The described components can each be hardware components or software components. For example, a software component can be a software module such as a software library; an individual procedure, subroutine, or function; or, depending on the programming paradigm, any other portion of software code that implements the function of the software component. A combination of hardware components and software components can occur, in particular, if some of the effects according to the invention are preferably exclusively implemented by special hardware (e.g., a processor in the form of an ASIC or FPGA) and some other part by software.

In the following, the term "component" is used for the components that perform the method, while the term "module" is used for the modules that are constituting the engineering project. Despite the dedicated use of these terms, both terms are simply referring to the generic concept of a module/component, which can be implemented in hardware, software, or a combination of both.

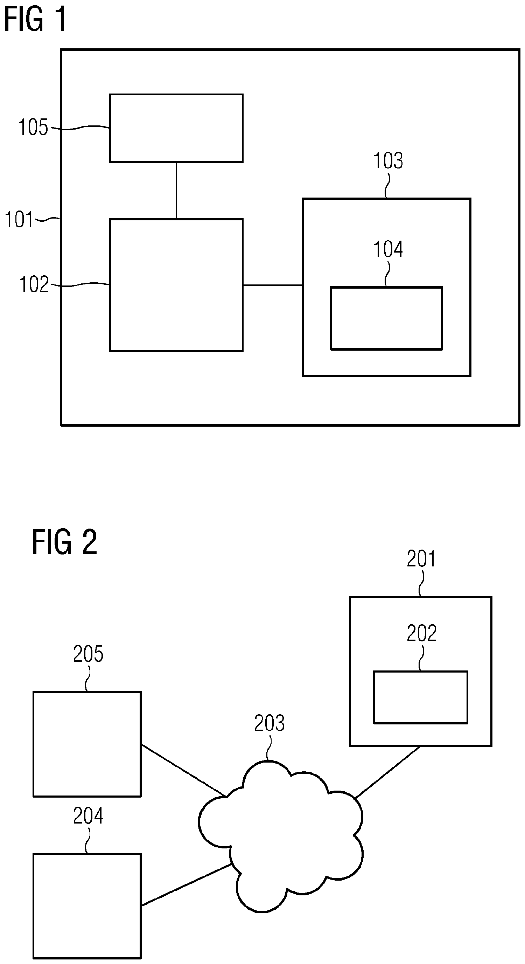

Fig. 1 shows one sample structure for computer-implementation of the invention which comprises:

(101)     computer system
(102)     processor
(103)     memory
(104)     computer program (product)
(105)     user interface

In this embodiment of the invention the computer program product 104 comprises program instructions for carrying out the invention. The computer program 104 is stored in the memory 103 which renders, among others, the memory and/or its related computer system 101 a provisioning device for the computer program product 104. The system 101 may carry out the invention by executing the program instructions of the computer program 104 by the processor 102. Results of invention may be presented on the user interface 105. Alternatively, they may be stored in the memory 103 or on another suitable means for storing data.

Fig. 2 shows another sample structure for computer-implementation of the invention which comprises:

(201)     provisioning device
(202)     computer program (product)

(203)     computer network / Internet
(204)     computer system
(205)     mobile device / smartphone

In this embodiment the provisioning device 201 stores a computer program 202 which comprises program instructions for carrying out the invention. The provisioning device 201 provides the computer program 202 via a computer network / Internet 203. By way of example, a computer system 204 or a mobile device / smartphone 205 may load the computer program 202 and carry out the invention by executing the program instructions of the computer program 202.

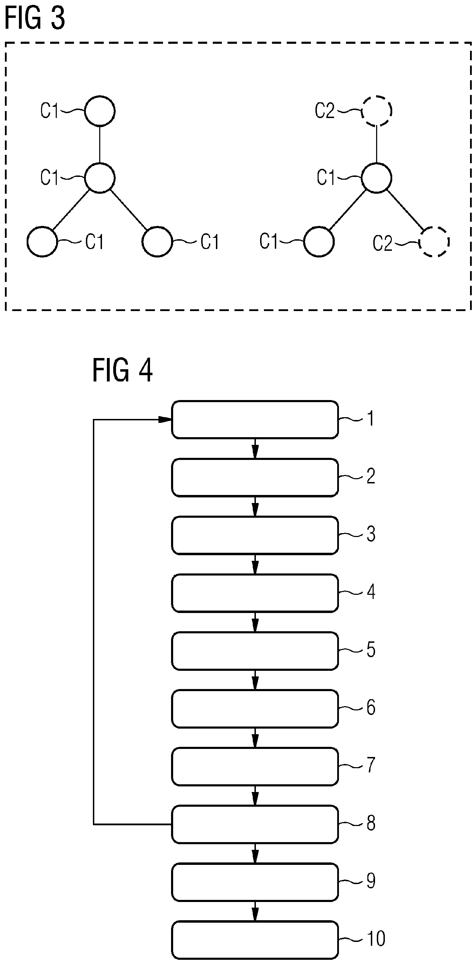

Preferably, the embodiments shown in Figs. 3 and 4 can be implemented with a structure as shown in Fig. 1 or Fig. 2.

The following embodiments formulate the recommendation of suitable modules as a (multi-label) node classification task, where the objective is to predict module types that should be connected to an existing module in a current state of the engineering project. A center node in the graph (without implying any particular position in the graph by the term "center") represents that existing module. To better exploit the graph structure, a graph neural network (GNN) is employed, which learns entity embeddings for node classification.

Compared to existing recommender systems that directly output the predictions and confidence scores, the following embodiments add a calibration step to make the confidence scores more interpretable.

More specifically, an embodiment of the method uses the topology of the graph as it provides structural information that is useful for calibration. In node classification, the class labels of a node's neighbors have a significant influence on the classification of the node. In the recommender system context, the classes represent modules or module types. The main idea behind the embodiment is that nodes with similar neighborhood structures and corresponding confidence scores should be calibrated in a similar way. In order to implement this, the embodiment defines a topology-based measure called same-class-neighbor ratio, which is the proportion of neighbors that have the same class as the center node $i$. Furthermore, the embodiment uses a novel binning scheme that groups samples into bins based on the estimated same-class-neighbor ratio for calibration. This binning scheme takes the graph structure into account and allows for an adaptive calibration depending on the node properties in each bin.

Let $G = (V, E)$ be an undirected graph, where $V$ is the set of nodes and $E$ the set of edges. The nodes represent modules and the edges connections between the modules. $\mathcal{N}(i)$ is defined as the set of neighbors of node $i$ in the graph. Each node is associated with a $d$-dimensional feature vector $x_i \in \mathbb{R}^d$, which describes the specific properties of the respective module. For example, if the module is an electronic component such as a resistor, the feature vector could describe physical dimensions (length, width, mass) and resistance value.

The goal of the node classification task is to assign each node $i \in V$ a class label $\hat{y}_i \in \mathcal{K} := \{1, 2, ..., K\}$, where $K$ stands for the total number of classes. In the recommender system context, the classes represent modules or module types.

A *graph neural network* (GNN) computes for each node an embedding $h_i \in \mathbb{R}^{\tilde{d}}$, which will serve as the input to a *classifier f*: $\mathbb{R}^{\tilde{d}} \to [0,1]^K$. The classifier *f* outputs for a node *i* a probability vector $p_i := f(h_i)$, where $\hat{p}_{ik}$ represents the *k*-th element in the vector and is a preliminary confidence score. The predicted class label for node *i* is then $\hat{y}_i = argmax_{k \in \mathcal{K}} \hat{p}_{ik}$, where the corresponding confidence score for class *k* is $\hat{p}_{ik}$.

The graph neural network (GNN) can be implemented as a GCN as described in Kipf, Thomas N., and Max Welling, "Semi-supervised classification with graph convolutional networks", arXiv preprint arXiv:1609.02907, 2016. The entire contents of that document are incorporated herein by reference.

Alternatively, the graph neural network (GNN) can be implemented as a GAT as described in Velickovic, Petar, et al., "Graph attention networks", arXiv preprint arXiv:1710.10903, 2017. The entire contents of that document are incorporated herein by reference.

The graph neural network (GNN) takes as input the **d**-dimensional feature vectors $x_i \in \mathbb{R}^d$ for the current nodes in the graph, for example in the form of a feature matrix $X \in \mathbb{R}^{N \times d}$, where N is the number of nodes, and an adjacency matrix $\mathbf{A} \in \{0,1\}^{N \times N}$, where 1 stands for an edge between two nodes and 0 for no edge. A non-binary $\mathbf{A} \in [0,1]^{N \times N}$ would also be possible if the edges are associated with weights. The adjacency matrix represents the current structure of the engineering project and the connections between the modules in the engineering project, in other words, the current graph.

The classifier *f* can be implemented, for example, as a neural network with a fully-connected layer, or as a multilayer perceptron (MLP). Some alternative implementations are logistic regression or a Naive Bayes classifier.

For an uncalibrated model, the preliminary confidence scores $\{\hat{p}_{ik}\}_{k=1,...,K}$ induce an ordering of the recommended module types. In turn, many recommender systems display their recommendations in descending order with respect to their confidence scores. However, if the confidence scores were calibrated, one could determine a threshold $t \in (0,1)$ and only display modules with

$\hat{p}_{ik} > t$. For example, for $t = 0.1$, one would only display the classes (module types) that have an estimated chance of at least 10% of being selected by the user.

For the calibration step, the embodiment defines the same-class-neighbor ratio for a node *i* as the proportion of neighbors in the graph that have the same class as node *i*.

Fig. 3 shows two examples with two classes, a first class C1 and a second class C2. The center node belongs to the first class C1. The same-class-neighbor ratio is calculated by dividing the number of neighbors that have the same class as the center node by the total number of neighbors of the center node. As a result, the same-class-neighbor ratio in the example on the left is 1, whereas the same-class-neighbor ratio in the example on the right is 1/3.

Since the ground-truth labels of the nodes and thus the same-class-neighbor ratios are usually not available for all nodes, the embodiment first approximates the same-class-neighbor ratio for each node. Then, it groups the nodes into **M** bins and learns a temperature for each bin to rescale and calibrate the confidence scores.

The estimated same-class-neighbor *ratio* for node *i* is defined as

$$\hat{r}(i) = \frac{1}{|\mathcal{N}(i)|} \sum_{j \in \mathcal{N}(i)} \hat{p}_{j_k} \quad \in [0,1],$$

where $k := \hat{y}_i$ is the predicted class for node *i* and $|\mathcal{N}(i)|$ the number of neighbors of node *i*.

In other words, the estimated same-class-neighbor ratio for node *i* is computed using only the preliminary confidence scores for class *k* of the neighbors, wherein *k* is the class with the highest confidence score for node *i*.

For the ratio-based binning scheme, let $\{B_m | 1 \le m \le M\}$ be a set of bins that partitions the interval **[0,1]** uniformly. After calculating the output (the preliminary confidence scores) for all nodes, each node *i* is assigned to a bin according to its estimated same-class-neighbor ratio $\hat{r}(i)$, i.e., $B_1 = \{i \in V \mid \hat{r}(i) \in [0, \frac{1}{M}]\}$ and

$B_m = \{i \in V \mid \hat{r}(i) \in (\frac{m-1}{M}, \frac{m}{M}]\}$ for $m \in \{2,3, ..., M\}$.

Let the output of the classifier *f* for node *i* be in the form $f(h_i) = \sigma(z_i)$, where $\sigma$ is the softmax function and $z_i \in \mathbb{R}^K$ the output logits before normalization. For each bin $B_m$, $m \in \{1,2, ..., M\}$, a temperature $T_m > 0$ for rescaling is learned during training. The calibrated confidence score for a test node *j* during deployment is then given by $\hat{q}_i = \sigma(\frac{z_j}{T_m})$ if $j \in \boldsymbol{B_m}$.

The input for this calibration step is the entire classification vector (the output of the classifier $\boldsymbol{f}$ for the respective node embedding), containing the preliminary confidence scores for every class, and the calibration step rescales all of the preliminary confidence scores, yielding calibrated confidence scores for every class.

The embodiment applies temperature scaling for calibrating the nodes in each bin, but alternative embodiments can apply other post-processing calibration methods for obtaining the calibrated confidence scores. For example, the nodes in each bin can also calibrated using histogram binning, Platt calibration, matrix and vector scaling, or Beta calibration, as described among others in Alex Dyakonov: "Confidence Calibration Problem in Machine Learning", available in the internet on 30.03.2022 at https://dasha.ai/en-us/blog/confidence-calibration-problem-in-machine-learning. The entire contents of that document are incorporated herein by reference.

Similarly, alternative embodiments can use a different topology-based measure instead of the same-class-neighbor ratio. For example, an alternative embodiment can use a measure depending on the feature vectors $\boldsymbol{x_i}$ or the node embeddings $\boldsymbol{h_i}$ within a n-hop neighborhood of the center node, e.g., calculating the absolute difference between the feature vector of each neighbor and the center node and then averaging over all features and neighbors to obtain a scalar value for the grouping. If needed, a normalization step can be included.

Model training:

Let the training data $\boldsymbol{T}$ consist of $\boldsymbol{N}$ historical industrial designs (completed engineering projects) that were configured in the past. That means, $\boldsymbol{T} = \{\boldsymbol{G_i} = (\boldsymbol{V_i}, \boldsymbol{E_i})\}_{i=1,..., \boldsymbol{N}}$, where each $\boldsymbol{G_i}$ corresponds to the graph representation of a completed engineering project. Heuristically speaking, the embodiment first deletes some of the nodes (and in turn the edges that involve the deleted nodes) in $\boldsymbol{G_i}$ and then aims to recover these nodes by the recommender system described in this embodiment. In particular, the embodiment trains and validates the recommender system (mainly the graph neural network (GNN) and the classifier $\boldsymbol{f}$) by its ability to complete the projects as they were previously configured before the deletion step. More concretely, the embodiment trains the parameters of the graph neural network (GNN) and the classifier $\boldsymbol{f}$ to recommend previously deleted nodes in $\boldsymbol{V_i}$. This can be achieved by optimizing trainable parameters of the graph neural network (GNN) and classifier $\boldsymbol{f}$ according to a training objective that maximizes the calibrated confidence scores for the correct classes of the deleted nodes.

Deployment:

Fig. 4 shows an embodiment for recommending modules for an engineering project. All of the previously described embodiments can be used for or integrated into the recommending process as depicted in Fig. 4, although the training phase can be completed beforehand.

During deployment, the embodiment produces recommendations while a user successively adds modules to the engineering project, for example an industrial automation system. Concretely, given a user has selected an existing module, that module becomes the center node, and the predictions for suitable modules are shown with their corresponding calibrated confidence scores to the user, who decides which module to add to the engineering project in the next step. Alternatively, as described above, variations of this embodiment could determine a threshold and display only modules with calibrated confidence scores above the threshold to the user. The user then selects a module (either from the set of recommendations or any other module), and the procedure is iterated until the engineering project is completed.

In more detail, the embodiment begins with a storing step 1, storing in a database a set of classes, with each class representing a type of module, and with each module consisting of a hardware module and/or software module that can be used in the engineering project. Also stored is a graph representing a current state of the engineering project with nodes and edges, with each node representing a module and its technical attributes that has been previously selected for this engineering project, with each edge representing a connection between the previously selected modules in the engineering project, with a current center node representing one of the previously selected modules to which a new module should be connected, wherein nodes connected to the current center node are neighbors of the current center node, with a blank node representing the new module, wherein the blank node has no technical attributes, and with an edge connecting the current center node to the blank node.

A graph neural network (GNN) performs a computing step 2, computing an embedding in latent space for each node or at least for the current center node and its neighbors.

A classifier performs a determining step 3, determining for each node embedding a preliminary confidence score for each class.

In a calculating step 4, a topology-based measure is calculated at least for the current center node.

In an assigning step 5, the blank node is assigned to a bin from a set of bins depending on the topology-based measure that has been computed for the current center node.

A post-processor executes a calibrating step 6, calibrating all preliminary confidence scores for the blank node by applying a scaling factor depending on the assigned bin.

A user interface performs an outputting step 7, outputting at least the class with the highest calibrated confidence score for the blank node as well as the respective calibrated confidence score.

In a recognizing step 8, the user interface recognizes a user interaction selecting the recommended class or one of the recommended classes.

The embodiment can then jump back to the storing step 1, updating the graph by instantiating the blank node with a module corresponding to the class that the user has selected, and by defining that instantiated node as the new current center node. The steps can be iterated in this way until the engineering project is completed with the final module.

To this end, the embodiment can perform an automatic completion step 9, automatically completing the engineering project by replacing the blank node with a module of the selected class in the database.

A variant of the embodiment can continue with an automatic production step 10 that automatically produces the engineering project, in particular by printing the engineering project with a 3D printer, or by automatically configuring autonomous machines, in particular by configuring software modules of the autonomous machines, in order to produce the engineering project, or by automatically assigning autonomous machines to perform as the modules of the engineering project, in particular by installing and/or activating and/or configuring software modules of the autonomous machines.

In other words, when presenting recommendations, the embodiment uses the module currently selected by the user (for example the module that the user added last) as a constraint. The recommended modules are modules that would be connected to the currently selected module, which is used as the current center node for computing the next recommendation.

For example, the post-processor can use a temperature for rescaling each bin. The temperature has been learned during training of the graph neural network (GNN) and classifier $f$. By the time the model (mainly consisting of the graph neural network (GNN) and classifier $f$) is deployed, the temperature (scaling value) for each bin has been fixed based on the training data. After deployment, only the topology-based measures and node classifications are iteratively recomputed based on the evolving graph, wherein in each iteration, the nodes are dynamically assigned to the bins based on the result. For each iteration, the final rescaling step within the bins uses the fixed scaling values previously determined during training.

Although there are different equivalent ways to implement the prediction step during the deployment phase, a preferred embodiment is as follows:
The user first selects an existing module to which a new module should be connected. The node in the graph representing that existing module is used as a current center node for the following computations. Alternatively, the current center node can automatically be set to the module that was last added by the user. A new edge is added in the graph between the current center node and a new, blank node that is added in the graph. This blank node is initialized with no node features (no technical attributes, or a zero-vector as feature vector for the blank node) since we do not have any information about this node. The graph neural network (GNN) is applied to the graph to obtain a node embedding for each node. Then, the classifier $f$ is used to calculate a classification vector for the blank node, containing a preliminary confidence score for each class. Depending on the same-class-neighbor ratio (or another topology-based measure) of the current center node, the classification vector of the blank node is calibrated. The class with the highest calibrated confidence score indicates the module that the recommender system outputs to the user as its recommendation. Alternatively, the user is shown a complete list of classes, sorted by decreasing calibrated confidence score and possibly truncated by a threshold. The user can then choose a module from the list to be added.

For example, the method can be executed by one or more processors. Examples of processors include a microcontroller or a microprocessor, an Application Specific Integrated Circuit (ASIC), or a neuromorphic microchip, in particular a neuromorphic processor unit. The processor can be part of any kind of computer, including mobile computing devices such as tablet computers, smartphones or laptops, or part of a server in a control room or cloud.

The above-described method may be implemented via a computer program product including one or more computer-readable storage media having stored thereon instructions executable by one or more processors of a computing system. Execution of the instructions causes the computing system to perform operations corresponding with the acts of the method described above.

The instructions for implementing processes or methods described herein may be provided on non-transitory computer-readable storage media or memories, such as a cache, buffer, RAM, FLASH, removable media, hard drive, or other computer readable storage media. Computer readable storage media include various types of volatile and non-volatile storage media. The functions, acts, or tasks illustrated in the figures or described herein may be executed in response to one or more sets of instructions stored in or on computer readable storage media. The functions, acts or tasks may be independent of the particular type of instruction set, storage media, processor or processing strategy and may be performed by software, hardware, integrated circuits, firmware, micro code and the like, operating alone or in combination. Likewise, processing strategies may include multiprocessing, multitasking, parallel processing and the like.

The invention has been described in detail with reference to embodiments thereof and examples. Variations and modifications may, however, be effected within the spirit and scope of the invention covered by the claims. The phrase "at least one of A, B and C" as an alternative expression may provide that one or more of A, B and C may be used.

**Claims**

1. A computer implemented method for recommending modules for an engineering project, comprising the following operations, wherein the operations are performed by components, and wherein the components are software components executed by one or more processors and/or hardware components:

   - storing (1), in a database,

     - a set of classes, with each class representing a type of module, and with each module consisting of a hardware module and/or software module that can be used in an engineering project, and
     - a graph representing a current state of the engineering project with nodes and edges,

       - with each node representing a module and its technical attributes that has been previously selected for the engineering project,
       - with each edge representing a connection between the previously selected modules in the engineering project,
       - with a current center node representing one of the previously selected modules to which a new module should be connected, wherein nodes connected to the current center node are neighbors of the current center node,
       - with a blank node representing the new module, wherein the blank node has no technical attributes, and
       - with an edge connecting the current center node to the blank node,

     - computing (2), by a graph neural network, an embedding in latent space for each node or at least for the current center node and its neighbors,
     - determining (3), by a classifier, for each node embedding a preliminary confidence score for each class,
     - calculating (4) a topology-based measure at least for the current center node,
     - assigning (5) the blank node to a bin from a set of bins depending on the topology-based measure that has been computed for the current center node,
     - calibrating (6), by a post-processor, all preliminary confidence scores for the blank node by applying a scaling factor depending on the assigned bin, and
   - outputting (7), by a user interface, at least the class with the highest calibrated confidence score for the blank node as well as the respective calibrated confidence score.

2. The method of claim 1,
   wherein the outputting operation (7) includes outputting a ranked list of the calibrated confidence scores as well as the respective classes for the blank node.

3. The method of claim 2,
   wherein only calibrated confidence scores above a given threshold are included in the ranked list.

4. The method according to any of the preceding claims, with the additional operations of

   - recognizing (8), by the user interface, a user interaction selecting the recommended class or one of the recommended classes, and
   - automatically completing (9) the engineering project by replacing the blank node with a module of the selected class in the database.

5. The method of claim 4,

   - with the additional step of automatically producing (10) the engineering project, in particular

     - by printing the engineering project with a 3D printer, or
     - by automatically configuring autonomous machines, in particular by configuring software modules of the autonomous machines, in order to produce the engineering project, or
     - by automatically assigning autonomous machines to perform as the modules of the engineering project, in particular by installing and/or activating and/or configuring software modules of the autonomous machines.

6. The method according to any of the preceding claims,

   - wherein the topology-based measure is a same-class-neighbor ratio, which is computed as a proportion of the neighbors of the current center node for which the class with the highest determined preliminary confidence score is identical to the class with the highest determined preliminary confidence score for the current center node.

7. The method according to any of the preceding claims, with the initial steps of

- using several graphs of completed engineering projects as training data,
- randomly deleting nodes in the training data, and
- adjusting trainable parameters of the graph neural network and classifier according to a training objective that maximizes, for blank nodes replacing the deleted nodes, the calibrated confidence scores for the classes of the deleted nodes.

8. The method according to any of the preceding claims, with the initial step of

- training the post-processor for temperature scaling for each bin, by determining an individual temperature as the scaling factor for each bin.

9. The method according to any of the preceding claims,

- wherein the engineering project is an industrial engineering project, in particular an industrial automation system.

10. A system for recommending modules for an engineering project, comprising the one or more processors, the database, the graph neural network (GNN), the classifier (f), the post-processor, and the user interface according to claim 1, wherein at least some of these components are hardware components, and wherein all of these components are configured for the execution of the respective operations according to claim 1.

11. Computer program product with program instructions for carrying out a method according to one of the method claims.

12. Provision device for the computer program product according to the preceding claim, wherein the provision device stores and/or provides the computer program product.

FIG 1

105

103

104

101

102

FIG 2

201

202

205

203

204

## FIG 3

## FIG 4

Europäisches
Patentamt

European
Patent Office

Office européen
des brevets

## EUROPEAN SEARCH REPORT

Application Number

EP 22 16 5798

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Wang Xiao ET AL: "Be Confident! Towards Trustworthy Graph Neural Networks via Confidence Calibration", , 4 January 2022 (2022-01-04), pages 1-24, XP055959279, Retrieved from the Internet: URL:https://arxiv.org/pdf/2109.14285.pdf [retrieved on 2022-09-09] * the whole document * | 1-12 | INV. G06N3/04 G06N5/02 G06N5/04 G06N7/00 |
| A | LEONARDO TEIXEIRA ET AL: "Are Graph Neural Networks Miscalibrated?", ARXIV.ORG, CORNELL UNIVERSITY LIBRARY, 201 OLIN LIBRARY CORNELL UNIVERSITY ITHACA, NY 14853, 7 May 2019 (2019-05-07), XP081370860, * the whole document * | 1-12 | |
| A | Thomas N Kipf ET AL: "Semi-Supervised Classification with Graph Convolutional Networks", Conference ICLR 2017, 22 February 2017 (2017-02-22), XP055457092, Retrieved from the Internet: URL:https://arxiv.org/pdf/1609.02907.pdf [retrieved on 2022-09-09] * the whole document * | 1-12 | TECHNICAL FIELDS SEARCHED (IPC) G06N |

-/--

The present search report has been drawn up for all claims

| Place of search | Date of completion of the search | Examiner |
|---|---|---|
| The Hague | 13 September 2022 | Moro Pérez, Gonzalo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

**EUROPEAN SEARCH REPORT**

Europäisches Patentamt
European Patent Office
Office européen des brevets

Application Number

EP 22 16 5798

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HILDEBRANDT MARCEL ET AL: "A Recommender System for Complex Real-World Applications with Nonlinear Dependencies and Knowledge Graph Context", EUROPEAN SEMANTIC WEB CONFERENCE, ESWC 2019; 16TH INTERNATIONAL CONFERENCE, ESWC 2019, PORTOROZ, SLOVENIA, JUNE 2-6, 2019, SPRINGER INTERNATIONAL PUBLISHING, CHAM, CH, vol. 11503 Chap.12, no. 558, 25 May 2019 (2019-05-25), pages 179-193, XP047514176, DOI: 10.1007/978-3-030-21348-0_12 ISBN: 9783030213480 [retrieved on 2019-05-25] * the whole document * | 1-12 | |
| | ----- | | |
| T | TONG LIU ET AL: "On Calibration of Graph Neural Networks for Node Classification", ARXIV.ORG, CORNELL UNIVERSITY LIBRARY, 201 OLIN LIBRARY CORNELL UNIVERSITY ITHACA, NY 14853, 3 June 2022 (2022-06-03), XP091238610, * the whole document * | | TECHNICAL FIELDS SEARCHED (IPC) |
| | ----- | | |

The present search report has been drawn up for all claims

| Place of search | Date of completion of the search | Examiner |
|---|---|---|
| The Hague | 13 September 2022 | Moro Pérez, Gonzalo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021037603 A1

- WO 2020120123 A1

**Non-patent literature cited in the description**

- **KIPF, THOMAS N. ; MAX WELLING.** Semi-supervised classification with graph convolutional networks. *arXiv:1609.02907,* 2016
- **VELIČKOVIC, PETAR et al.** Graph attention networks. *arXiv:1710.10903,* 2017

- **ALEX DYAKONOV.** *Confidence Calibration Problem in Machine Learning,* 30 March 2022, https://dasha.ai/en-us/blog/confidence-calibration-problem-in-machine-learning